# FASCICULE DE BREVET EUROPEEN

(11) **EP 0 740 725 B1**
(45) Date de publication et mention de la délivrance du brevet: **28.06.2000**
(21) Numéro de dépôt: 95908309.8
(22) Date de dépôt: 03.02.1995
(51) Int. Cl.: E03D 1/36, E03D 1/14, F16K 31/524

(54) **EQUIPEMENT POUR LE REMPLISSAGE ET LE VIDAGE DES RESERVOIRS DE CHASSE DE WC**
ANORDNUNG ZUM FÜLLEN UND ENTLEEREN EINES TOILETTENSPÜLKASTENS
DEVICE FOR REFILLING AND EMPTYING LAVATORY FLUSHING CISTERNS

(30) Priorité: 26.05.1994 FR 9406651; 07.09.1994 FR 9410933; 07.09.1994 FR 9410934
(43) Date de publication de la demande: 06.11.1996
(73) Titulaire: Piat, Moise, 06000 Nice (FR); Videau, Laurent, Bangkok 10110 (TH)
(72) Inventeur: Piat, Moise, 0600 Nice (FR)
(74) Mandataire: Bonneau, Gérard
(86) Numéro de dépôt international: FR9500136
(87) Numéro de publication internationale: WO9533102

(56) Documents cités:
- WO-A-85/03964
- DE-A- 2 412 780
- DE-A- 2 856 242
- FR-A- 2 676 480
- GB-A- 2 179 074

## Description

L'invention se rapporte à un équipement pour le remplissage et le vidage des réservoirs de chasse du type qui offre à l'usager le choix entre une petite et une grande chasse.

Il est également du type dans lequel le robinet et le mécanisme coopèrent pour former un ensemble homogène dont les différents éléments se placent à l'intérieur d'un réservoir interne.

Ce dernier principe est connu notamment à travers le brevet Européen N°O1722778 A 3 mais, dans le cas de la présente invention, le dispositif de trop plein comporte des aménagements visant, lors d'une chasse à assurer un guidage qui empêche le refoulement de l'eau dans le réservoir du W.-C.

Pour bien comprendre l'invention on pourra utilement se référer aux figures ci annexées données à titre d'exemples non limitatifs.

Les figure l, 2 et 3 sont des coupes longitudinales qui montrent les différentes phases d'une opération de chasse à savoir:
1) la position de non usage, réservoir rempli
2) la position d'ouverture dans le cas de la petite chasse
3) la position d'ouverture dans le cas de la grande chasse

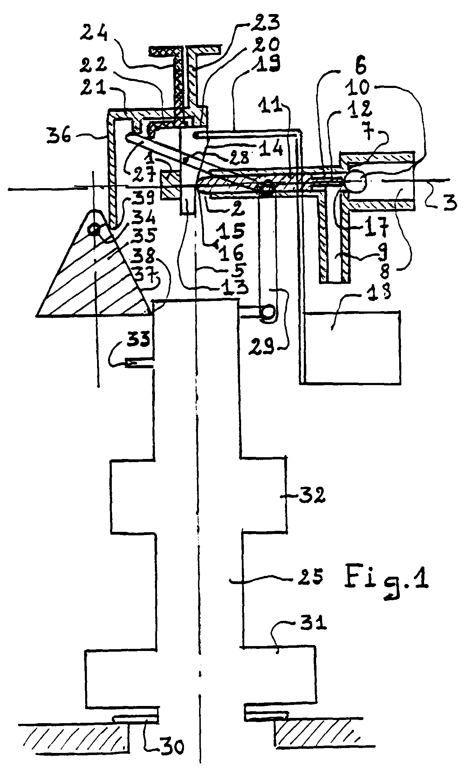

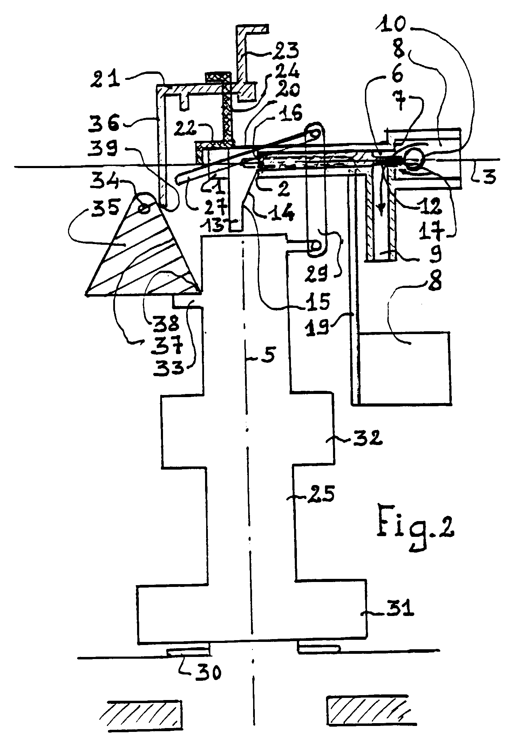

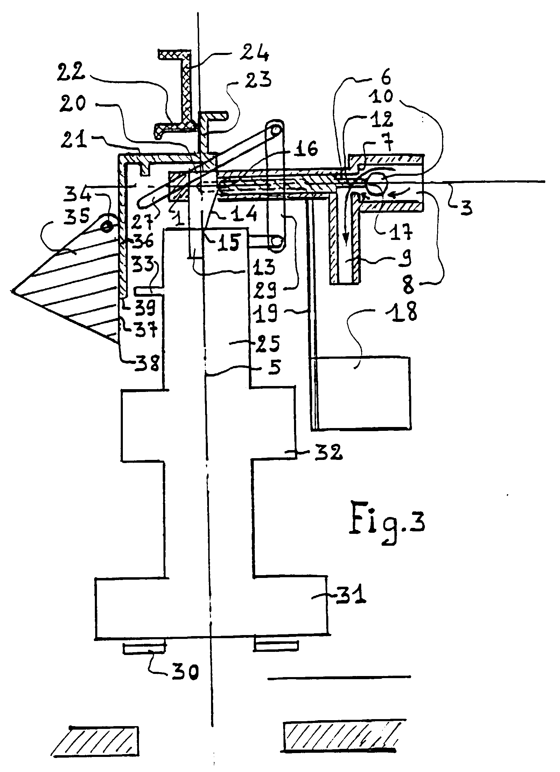

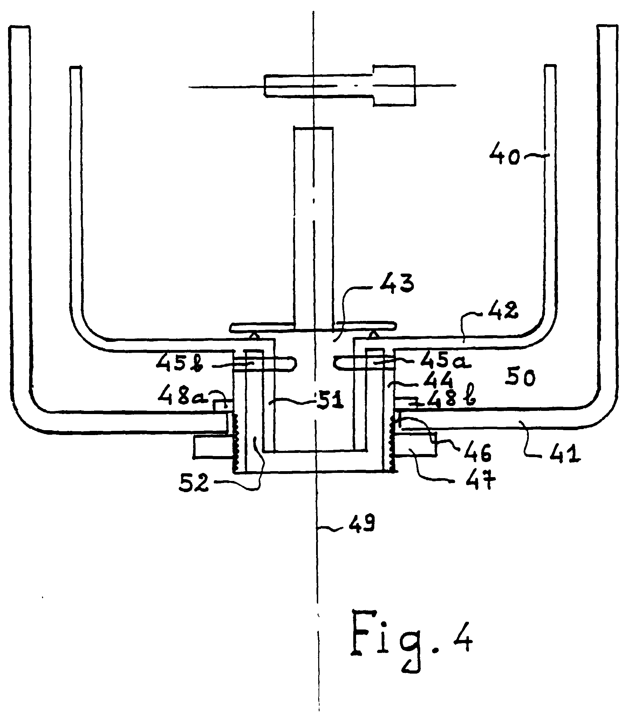

La figure 4 montre l'ensemble robinet mécanisme monté dans un réservoir interne avec son dispositif de trop plein

Le corps du robinet simple est constitué par une plaque parallélépipédique (1) disposée horizontalement et qui comporte une ouverture (2) de section rectangulaire. L'axe longitudinal (3) de la plaque (1) est perpendiculaire à l'axe (5) de l'ouverture (2);

D'un côté de l'ouverture (2) et selon l'axe (3) est ménagé un conduit cylindrique horizontal (6) qui, d'un côté, débouche dans l'ouverture (2) et, de l'autre, comporte un épaulement (7) de diamètre supérieur à celui de (6) et qui se prolonge par un compartiment cylindrique (8) dans lequel entre l'eau sous pression.

Sur le conduit (6) au voisinage de (7) est branché un conduit vertical ouvert (9) dirigé vers le bas

A l'intérieur du compartiment (8) se place une bille (l0) de diamètre supérieur à celui de (6) de sorte que, sous l'effet de la pression, cette bille vient se plaquer de manière étanche contre épaulement (7).

A l'intérieur de (6) coulisse une soupape (11) qui, du côté de (7),porte un téton (12) de diamètre inférieur à celui de (11).

Une came (13) coulisse verticalement à l'intérieur de l'ouverture (2) et comporte une rampe (14). Cette came (13) est solidarisée avec un flotteur (18) par un moyen quelconque comme par exemple une tige (19) disposée en équerre;

L'ensemble est aménagé de manière à ce que, dans la situation de fermeture du robinet:
a) La base (15) de la rampe (14) se trouve au contact de l'extrémité (16) de la soupape (11).
b) L'extrémité (17) du téton (12) se trouve au contact de la bille (10) plaquée sur son siège (7).

Sur la face horizontale supérieure (20) de la came (13) s'appliquent deux plaques horizontales (21) et (22) sur le dessus desquelles sont fixées des tiges verticales (23) et (24).

Les plaques (21) et (22) coopèrent avec un dispositif quelconque de soulèvement du tube (25) de trop plein, dispositif qui peut par exemple être constitué par une fourche (27) qui, en pivotant autour d'un axe horizontal (28)entraîne une biellette (29), le tout aménagé de manière à ce que le tube (25) soit soulevé quelque soit la tige de commande utilisée.

Le tube (25) qui porte à sa base le clapet de vidage (30) porte également, dans sa partie inférieure, un flotteur (31) puis dans sa partie médiane, un flotteur (32) et enfin, dans sa partie supérieure, une plaque horizontale en saillie(33)

Autour d'un axe (34) parallèle à (28) pivote librement une plaque (35) tandis qu'en dessous de l'une des plaques de commande, par exemple (21) est fixée une tige (36), la plaque (35) et la tige (36) s'inscrivant dans un même plan vertical.

La plaque (35) est disposée et suspendue de manière à ce que, en position normale de pesanteur, l'un de ses cotés constitue une rampe inclinée (37) dont l'extrémité inférieure (38) se situe dans l'espace de soulèvement vertical de la plaque (35).

De son cote la tige (36) se trouve alors au contact de la rampe (37) par son extrémité (39) de sorte que l'enfoncement de cette tige (36) fait pivoter la plaque (35) dont extrémité (38) sort alors du champ de soulèvement de la plaque (33).

Le fonctionnement d'ensemble du dispositif est le suivant à partir de la situation de la figure 1, réservoir rempli:

L'enfoncement de l'une quelconque des tiges (23) ou (24) entraîne celui de la came (13) dont la rampe (14) déplace la soupape (11) laquelle, par son extrémité (12) écarte la bille (10) de son siège (7).

L'eau circule alors du compartiment (8) vers le conduit ouvert (9) et remplit le réservoir.

Dans la phase finale de ce remplissage le flotteur (18) se soulève ce qui ramène la came (13) à sa position initiale. La soupape (11) reprend sa place et la bille (10) se plaque à nouveau sur son siège (7) ce qui interrompt l'écoulement et ferme le robinet.

Lorsque la chasse est déclenchée par l'usager au moyen de la tige (24) la plaque (21) reste en place avec sa tige (36) et il en va de même pour la plaque (35).

L'extrémité (38) agit alors comme butée pour la plaque en saillie(33).

L'amplitude de soulèvement ainsi déterminé correspond à une situation où l'aspiration qu'il subit le ferait retomber instantanément sur son siège d'étanchéité si cette retombée n'était pas temporisée par l'action du flotteur intermédiaire (32).

Ce dernier est dimensionné de manière à ce que la poussée verticale qu'il subit soit supérieure à la force d'aspiration qui s'applique sur le tube (25) lequel retombe dés que le flotteur (32) cesse d'être immergé.

Ce processus correspond à la petite chasse dont le volume est déterminé par la position, réglable, du flotteur (32) sur le tube (25).

Lorsque la chasse est déclenchée par l'usager au moyen de la tige (23), la plaque (35) s'escamote par l'action de la tige (36) pour permettre le libre mouvement ascendant du tube (25) lequel, subissant les poussées additionnées des flotteurs (31) et (32), s'élève jusqu'au niveau qui correspond à une situation où le clapet (30) se trouve en dehors de la zone d'aspiration.

Le tube (25) est alors maintenu en suspension jusqu'à ce que cesse l'action du flotteur (31) et ce processus correspond à la grande chasse.

Dans la figure 4 l'ensemble robinet mécanisme est logé dans un réservoir (40) de forme générale parallelépipédique qui se loge dans le réservoir (41) du W.-C.

Le réservoir (40) comporte, ménagé dans le centre de son fond horizontal (42) un trou circulaire (43).

Sur le dessous du fond (42) est fixé un élément cylindrique (44) dont l'axe (49) coïncide avec celui du trou (43) et dont le diamètre lui est légèrement supérieur.

L'élément (44) comporte à sa partie supérieure une série de fentes horizontales (45a), (45b) et à sa partie inférieure, une partie filetée.

Cet élément (44) passe à travers le trou (46) du réservoir (41) avec qui il est solidarisé au moyen d'un écrou (47), des épaulements (48a) et (48b) ménageant un espace fixe (50) entre l'extérieur du réservoir (40) et l'intérieur du réservoir (41).

Le trou (43) est garni fixe sur son pourtour intérieur et dirigé vers le bas un élément cylindrique (51).

En cas de débordement du réservoir (40) l'eau de trop plein s'écoule vers la cuvette en traversant les fentes (45) et en passant par l'espace cylindrique (52) qui s'est établi entre les éléments concentriques (44) et (51) ce dernier ayant pour fonction lors d'une chasse de guider le flux en empêchant que l'eau puisse refouler dans l'espace (50)

## Revendications

1. Equipement pour réservoir de chasse de W-C. du type qui comporte un robinet pour le remplissage et un mécanisme pour le vidage, cas deux éléments étant, à l'occasion d'une chasse, actionnés simultanément par l'usager lequel, selon qu'il appuie sur l'une ou l'autre des tiges verticales de commande (23, 24), provoque un vidage partiel ou total, également du type dans lequel le clapet de vidange (30) du réservoir est fixé sur la base du tube (25) de trop plein, caractérisé par le fait que l'enfoncement de l'une quelconque des tiges de commande (23) ou (24) entraîne le coulissement d'une soupape horizontale (11) logée dans le corps (1) du robinet,
que cette soupape écarte alors une bille (10) de son siège (7) d'étanchéité pour provoquer l'ouverture du circuit hydraulique de remplissage du réservoir,
qu'à la fin de ce remplissage un flotteur (18) agit sur les moyens par lesquels la soupape (11) avait été entraînée an coulissement afin de permettre à ladite soupape de se replacer dans sa position initiale,
que l'enfoncement de l'une des tiges de commande entraîne automatiquement l'intervention de moyens mécaniques par lesquels la course ascendante du tube (25) se bloque à un niveau qui correspond à la petite chasse et que l'enfoncement de l'autre tige entraîne automatiquement l'intervention de moyens mécaniques par lesquels ledit tube (25) se trouvant libéré de toute entrave peut poursuivre sa course ascendante jusqu'à un niveau correspondant à la grande chasse,
que dans le cas où le réservoir (40) est lui-même logé à l'intérieur d'un autre réservoir (41) qui est celui du W-C., la fixation des deux réservoirs entre eux comporte des moyens par lesquels l'eau d'une chasse est empêchée de refouler dans le réservoir(41).

2. Equipement pour réservoir de chasse de W-C selon la revendication 1 caractérisé par le fait que les moyens par lesquels la soupape (11) est entraînée en coulissement sont constitués par une came (13) coulissant verticalement dans un conduit (2) qui, à l'intérieur du corps (1) du robinet croise le conduit (6) et que, au-dessus de la face horizontale supérieure (20) de la came (13) se placent les plaques horizontales (21) et (22) sur le dessus desquelles sont fixées les tiges (23) et (24)

3. Equipement pour réservoir de chasse de W-C selon les revendications 1 et 2 caractérisé par le fait qu'en situation de repos la soupape (11) se place, par son extrémité (16) au contact de la base (15) de la rampe (14) de la came (13) et que de l'autre coté elle porte un téton (12) qui, dans cette même situation se place au contact d'une bille (10) bloquée de manière étanche contre le siège (7),
que sur le conduit (6) est branché, dirigé vers le bas, un tuyau (9) de guidage du flux de remplissage et que le flotteur (18) est solidaire de la came(13)

4. Equipement pour réservoir de chasse de W-C selon la revendication 1 caractérisé par le fait que le tube (25) porte à sa partie inférieure un flotteur (31), à sa partie médiane un flotteur (32) et à sa partie supérieure une plaque horizontale en saillie (33)

5. Equipement pour réservoir de chasse de W-C selon les revendications 1 et 4 caractérisé par le fait qu'autour d'un axe horizontal (28) pivote une plaque (35) disposée et suspendue de manière à ce que, en position normale de pesanteur, l'un de ses cotés constitue une rampe inclinée (37) dont l'extrémité inférieure (38) se situe dans l'espace de soulèvement vertical de la plaque (33)

6. Equipement pour réservoir de chasse de W-C selon les revendications précédentes caractérisé par le fait que l'une des plaques de commande par exemple (21) porte, fixée sur sa partie inférieure, une tige verticale (36) qui s'inscrit dans le même plan vertical que celui de la plaque (35) et dont l'extrémité (39) se trouve au contact de (37) dans la situation de non usage de telle sort que l'enfoncement de le plaque (21) provoque un pivotement de la plaque (35) d'une amplitude telle que l'extrémité (38) sorte alors du champ de soulèvement de la plaque (33)

7. Equipement pour réservoir de chasse de W-C selon les revendications précédentes caractérisé par le fait que le volume du flotteur (31) est établi de manière à ce que la poussée ascendante qu'il subit :
a/ n'entraîne pas le soulèvement intempestif du tube (25) lors du nouveau remplissage
b/ soit suffisante pour maintenir en suspension le tube (25) jusqu'au vidage complet dans le cas d'ouverture d'amplitude maximale.
c/ soit inférieure à l'aspiration que subit le tube (25) lorsque, dans le cas de l'ouverture limitée, le niveau est descendu jusqu'au plan où le flotteur (32) cesse d'être immerge

8. Equipement pour réservoir de chasse de W-C selon les revendications précédentes caractérisé par le fait que le volume du flotteur (32) est établi de manière à ce que la poussée ascendante qu'il subit soit suffisante pour maintenir en suspension le tube (25) jusqu'au niveau où il n'est plus lui même immergé.

9. Equipement pour réservoir de chasse de W-C selon la revendication 1 caractérisé par le fait que le fond (42) du réservoir intérieur (40) comporte en son milieu un trou circulaire (43) sur le pourtour duquel est fixé, dirige vers le bas un élément cylindrique vertical (51), que sur le dessous du fond (42) est fixé un autre élément cylindrique (44) dont l'axe (49) est commun avec celui de (43) et de (51) et que les éléments (44) et (51) ménagent entre eux un espace cylindrique (52)

10. Equipement pour réservoir de chasse de W-C selon les revendications 1 et 9 caractérisé par le fait que élément (44) comporte à sa partie supérieure des fente horizontales (45a) et (45b) qui font communiquer l'espace (50) existant entre le réservoir (40) et le réservoir (41) du W.-C. avec l'espace (52) que l'élément (44) comporte encore des épaulements (48a) et (48b) qui s'appuient sur le fond du réservoir (41) et, enfin à sa base une partie filetée par laquelle, au moyen d'un écrou (47)cet élément (44) est solidarisé avec le réservoir (41)

## Claims

1. Device for refilling and emptying ;lavatory flashing cisterns in the category which allows a tap for the refilling and a mechanism for the emptying. These two components being during a flush, simultaneously moved by the user, whom according as he presses on one or the other vertical ordering rod (23,24), incites to a partial or whole emptying also in the category in which the emptying valve (30) is settled on the basis of the tube (25) of out full, marked by the fact that any driving in ordering rod (23) or( 24) carries along the sliding of a horizontal valve put into the tap (1),
- Then the valve keeps away a ball (10) from the watertightness seat (7) to entail the opening of the hydraulic circuit of the refilling cistern,
- At the end of the refilling, a ball (18) acts on the means on which the valve (11) carries along the sliding so that to allow the said valve to be again in its initial place,
- That the driving in of one of the ordering rods entails automatically the intervening of mechanic means by which the upward run of the pipe (25) jams at a level which corresponds to the small flash and that the driving in of the other rod entails automatically the intervening of mechanic means by which the said pipe (25) being free of all hindrance can follows its upward run till a level corresponding to the big flush,
- That in the case of the cistern (40) is itself lodged inside an other cistern (41) which is the W.C. one, the biding of the two cisterns altogether allows means by which the water of a flush is hindered from stemming in the cistern (41).

2. Device for refilling and emptying lavatory flushing cisterns according to the claim 1 marked by the fact that the means by which the valve (11) is carried along by sliding, are settled by a cam (13) vertically sliding in a pipe (2) which inside the tap (1), crosses the pipe (6) and that above the higher horizontal side (20) of the cam (13) place themselves the horizontal plates (21) and (22) on the top of which are settled the rod (23) and (24).

3. Device for refilling and emptying lavatory flushing cisterns according to the claims 1 and 2 marked by the fact that at rest position the valve (11) places itself, by its extremity (16) touching the basis (15) of the cam (13) ramp (14) and that from the other side its carries a stop (12) which, in the same position places itself in touching the ball (10) blocked in a watertight way against the seat (7),
- That on the conduit (6) is connected, drived down, a pipe (9) of flood refilling guidance and that the ball (18) is binding to the came (13).

4. Device for refilling and emptying lavatory flushing cisterns according to the revendication 1 marked by the fact that the pipe (25) carries along its lower part a ball (31), its median part a ball (32) and its higher part an horizontal plate in bound (33).

5. Device for refilling and emptying lavatory flushing cisterns according to the claim 1 and 4 marked by the fact that around the horizontal axis (28) swings round a plate (35) arranged and hanging so that in normal position of gravity, one of its side composes an inclined ramp (37) from which the lower extremity (38) is situated in the vertical raising space of the plate (33).

6. Device for refilling and emptying lavatory flushing cisterns according to the previous claims marked by the fact that one of the ordering plates for instance (21) carries along its lower part, a vertical rod (36) which enters in the same vertical plan than the one of the plate (35) and from which the extremity (39) is getting in touch with (37) in the unworking situation so that the driving into the plate (21) allows a swing round the plate (35) in a such amplitude as the extremity (38) is then out of the rising field of the plate (33).

7. Device for refilling and emptying lavatory flushing cisterns according to the previous claims marked by the fact that the volume ball (31) is determined so that the upward thrust which it suffers :
a/ Do not involve the untimely pipe raising (25) during the new refilling,
b/ Be sufficient to maintain the pipe (25) in suspension till the entire emptying in case of a maximal opening,
c/ Be lower than the suction the pipe (25) suffers when, in the case of a limited opening, the level get down till the point where the ball (32) stops to be immerged.

8. Device for refilling and emptying lavatory flushing cisterns according to the previous claims marked by the fact that the volume of the ball (32) is set up as to the upward thrust that it suffers be sufficient to maintain in suspension the pipe (25) till the level where it is no more immerged itself.

9. Device for refilling and emptying lavatory flushing cisterns according to claim 1 marked by the fact that the bottom (42) of the inner cistern (40) allows in its middle a round hole (43) on the periphery of which is set up a drived down vertical cylindrical item (51), that under the bottom (42) is set up an other cylindrical item (44) whose axis (49) is mutual with the one of (43) and the one of (51) and that the items (44) and (51) arrange between them a cylindrical space (52).

10. Device for refilling and emptying lavatory flushing cisterns according to claim 1 and 9 marked by the fact that the item (44) allows in its higher part horizontal slots (45 a) and (45 b) which make communicate the space (50) existing with the space (52), that the item (44) still allows epaulements (48 a) and (48 b) which lay on the bottom of the cistern (41) and at its basis a thread part by which thanks to a nut (47) this item (44) is linked together with the cistern (41).

## Patentansprüche

1. Ausrüstung für WC-Spülkasten so ausgelegt, daß sie einen Hahn für die Füllung und einen Mechanismus für die Entleerung aufweist, wobei diese beiden Elemente bei einem Spülvorgang vom Benutzer gleichzeitig betätigt werden, der je nachdem, ob er auf die eine oder die andere der vertikalen Steuerstangen (23, 24) drückt, eine teilweise oder gänzliche Entleerung bewirkt, und so ausgelegt, daß das spülkastenseitige Auslaßventil (30) am unteren Teil des Überlaufrohrs (25) befestigt ist, dadurch gekennzeichnet, daß das Drücken auf eine der Steuerstangen (23) oder (24) die Gleitbewegung eines im Hahnkörper (1) untergebrachten horizontalen Ventils (11) nach sich zieht.
daß dieses Ventil dann eine Kugel (10) aus ihrem Dichtungssitz (7) schiebt, um die Öffnung des Hydraulikkreises für die Spülkastenfüllung einzuleiten.
daß am Ende dieser Füllung ein Schwimmer (18) auf die Mittel einwirkt, mit welchen das Ventil (11) in die Gleitbewegung geführt wurde, um das besagte Ventil in seine Ausgangsposition zu bringen.
daß das Drücken auf die eine der Steuerstangen automatisch die mechanischen Mittel in Gang setzt, mit welchen der Aufwärtshub des Rohrs (25) auf eine Höhe blockiert wird, die der kleinen Spülung entspricht, und daß das Drücken auf die andere Stange automatisch die mechanischen Mittel in Gang setzt, mit welchen das besagte Rohr (25), das von jeglichem Hindernis befreit ist, seinen Aufwärtshub bis zur einer Höhe verfolgen kann, die der großen Spülung entspricht.
daß wenn der Spülkasten (40) selbst im Inneren eines anderes Spülkastens (41), welcher dem WC-Spülkasten entspricht, untergebracht ist, die Befestigung der beiden Spülkästen untereinander Mittel aufweist, mit welchen das Wasser einer Spülung am Rückfluß in den Spülkasten (41) gehindert wird.

2. Ausrüstung für WC-Spülkasten nach Anspruch 1 dadurch gekennzeichnet, daß die Mittel, mit denen das Ventil (11) zur Gleitbewegung gebracht wird, aus einem Nocken (13) bestehen, welcher in einem Kanal (2) vertikal gleitet, der im Inneren des Hahnkörpers (1) den Kanal (6) kreuzt, und daß über der horizontalen Oberseite (20) des Nockens (13) die horizontalen Platten (21) und (22) plaziert sind, auf deren Oberseite die Stangen (23) und (24) befestigt sind.

3. Ausrüstung für WC-Spülkasten nach Anspruch 1 und 2 dadurch gekennzeichnet, daß das Ende (16) des Ventils (11) in der Ruhestellung mit dem Anfang (15) der Neigung (14) des Nockens (13) in Kontakt tritt, und daß es auf der anderen Seite einen Zapfen (12) aufweist, der in derselben Stellung mit einer Kugel (10) in Kontakt tritt, die gegen den Sitz (7) wasserdicht blockiert ist.
dadurch daß an den Kanal (6) ein Rohr (9) für die Führung des Füllungsflußes nach unten gerichtet angeschlossen ist und daß der Schwimmer (18) mit dem Nocken (13) fest verbunden ist.

4. Ausrüstung für WC-Spülkasten nach Anspruch 1 dadurch gekennzeichnet, daß das Rohr (25) an seinem unteren Teil einen Schwimmer (31), an seinem mittleren Teil einen Schwimmer (32) und an seinem oberen Teil eine vorstehende horizontale Platte (33) trägt.

5. Ausrüstung für WC-Spülkasten nach Anspruch 1 und 4 dadurch gekennzeichnet, daß sich um eine horizontale Achse (28) eine Platte (35) dreht, die so angeordnet und aufgehängt ist, daß in normaler Schwereposition eine ihrer Seiten eine geneigte Ebene (37) bildet, deren unteres Ende (38) im vertikalen Anhubraum der Platte (33) liegt.

6. Ausrüstung für WC-Spülkasten nach den vorhergehenden Ansprüchen dadurch gekennzeichnet, daß eine der Steuerplatten, z.B. (21), eine an ihrem unteren Teil befestigte vertikale Stange (36) trägt, die in derselben vertikalen Ebene liegt wie die Platte (35), und deren Ende (39), wenn sie nicht betätigt wird, mit (37) in Kontakt tritt, so daß das Drücken auf die Platte (21) eine so starke Drehung der Platte (35) bewirkt, daß das Ende (38) dann aus dem Anhubfeld der Platte (33) austritt.

7. Ausrüstung für WC-Spülkasten nach den vorhergehenden Ansprüchen dadurch gekennzeichnet, daß das Volumen des Schwimmers (31) so ausgelegt ist, daß der von ihm ausgeführte Aufwärtsschub:
a/ bei einer neuen Füllung keinen ungewollten Anhub des Rohres (25) nach sich zieht;
b/ stark genug ist, um das Rohr (25) im Fall einer maximalen Öffnung bis zur kompletten Entleerung angehoben zu halten;
C/ schwächer ist als die Ansaugung des Rohres (25), wenn im Fall einer beschränkten Öffnung die Höhe bis zur Ebene abfällt, in welcher der Schwimmer (32) nicht mehr eingetaucht ist.

8. Ausrüstung für WC-Spülkasten nach den vorhergehenden Ansprüchen dadurch gekennzeichnet, daß das Volumen des Schwimmers (32) so ausgelegt ist, daß der von ihm ausgeführte Aufwärtsschub ausreicht, um das Rohr (25) bis zur Höhe, in welcher es selbst nicht mehr eingetaucht ist, angehoben zu halten.

9. Ausrüstung für WC-Spülkasten entsprechend Anspruch 1 dadurch gekennzeichnet, daß der Boden (42) des inneren Spülkastens (40) in der Mitte ein rundes Loch (43) aufweist, auf dessen Umfang ein zylindrisches vertikales Element (51) nach unten richtet befestigt ist, daß auf der Unterseite des Bodens (42) ein anderes zylindrisches Elements (44) befestigt ist, dessen Achse (49) mit der Achse von (43) und (51) identisch ist, und daß die Elemente (44) und (51) untereinander einen zylindrischen Raum (52) bilden.

10. Ausrüstung für WC-Spülkasten nach Anspruch 1 und 9 dadurch gekennzeichnet, daß das Element (44) an seinem oberen Teil horizontale Spalte (45a) und (45b) aufweist, durch welche der zwischen dem Spülkasten (40) und dem Spülkasten (41) des WC's bestehende Raum (50) mit dem Raum (52) verbunden ist, und daß das Element (44) außerdem Ansätze (48a) und (48b), die sich auf dem Boden des Spülkastens (41) abstützen, und an seinem Fuß einen Gewindeteil aufweist, über welchen dieses Element (44) mit dem Spülkasten (41) mittels einer Mutter (47) fest verbunden ist.
